# FASCICULE DE BREVET EUROPEEN

(11) **EP 3 449 189 B1**
(45) Date de publication et mention de la délivrance du brevet: **14.09.2022**
(21) Numéro de dépôt: 17725302.8
(22) Date de dépôt: 24.04.2017
(51) Int. Cl.: F24C 7/06, F24C 15/10, A47B 96/18, H05B 6/12

(54) **PLAQUE VITROCERAMIQUE POUR PLAN DE TRAVAIL OU MEUBLE**
GLASKERAMIKPLATTE FÜR EINE ARBEITSPLATTE ODER EIN MÖBELSTÜCK
GLASS-CERAMIC PLATE FOR A WORKTOP OR A PIECE OF FURNITURE

(30) Priorité: 25.04.2016 FR 1653644
(43) Date de publication de la demande: 06.03.2019
(73) Titulaire: Eurokera S.N.C., 02400 Château-Thierry (FR)
(72) Inventeur: ROUX, Nicolas, 02400 Chateau-Thierry (FR); VILATO, Pablo, 75014 Paris (FR); DEMOL, Franck, 51100 Reims (FR); DEBREYER, Grégory, 77140 Montcourt Fromonville (FR); RAVEL, Michaël, 02850 Barzy Sur Marne (FR); CHARPENTIER, Bertrand, 02400 Chateau-Thierry (FR)
(74) Mandataire: Saint-Gobain Recherche
(86) Numéro de dépôt international: PCT/FR2017/050964
(87) Numéro de publication internationale: WO 2017/187071

(56) Documents cités:
- EP-A1- 2 865 949
- EP-A2- 1 106 931
- FR-A1- 2 258 353
- FR-A1- 2 744 201
- FR-A1- 2 980 556
- US-A- 5 859 410
- US-B1- 6 498 326

## Description

La présente invention concerne une plaque (en) vitrocéramique, en particulier destinée à servir de plan de travail ou de surface (notamment horizontale) de meuble, cette plaque étant en particulier de grandes dimensions, l'invention concernant également le mobilier ainsi formé.

La vitrocéramique est notamment utilisée depuis plusieurs années pour former des plaques de cuisson en vitrocéramique, lesquelles rencontrent un grand succès auprès des ménagistes, fabricants d'électroménagers et utilisateurs de par leur aspect attractif et leur facilité de nettoyage.

Les plans de travail sont quant à eux généralement réalisés en d'autres matériaux, par exemple le bois, le quartz, le Corian^{®}, etc, cependant l'utilisation de plaques vitrocéramiques pour réaliser ces plans de travail, bien qu'induisant des problématiques spécifiques à ce matériau, s'avère particulièrement intéressante.

Une vitrocéramique est à l'origine un verre, dit verre précurseur (ou verre-mère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Chaque produit en vitrocéramique est le résultat d'études spécifiques et de nombreux essais, étant donné qu'il est très délicat de faire des modifications sur des vitrocéramiques et/ou sur leur procédé d'obtention sans risquer un effet défavorable sur les propriétés recherchées : par exemple, dans son usage habituel comme plaque de cuisson, une plaque vitrocéramique doit généralement présenter une transmission dans le domaine du visible à la fois suffisamment basse pour masquer les éléments de chauffage sous-jacents au repos et suffisamment élevée pour que l'utilisateur puisse détecter visuellement lesdits éléments en état de marche dans un but de sécurité et/ou puisse lire des afficheurs éventuels. Les plaques vitrocéramiques doivent également présenter une résistance mécanique suffisante telle que requise pour leur utilisation, notamment et à plus forte raison quand elles sont de grande taille, en particulier, dans le domaine de l'électroménager, doivent présenter une bonne résistance (définie par exemple selon la norme EN 60335-2-6 dans leur usage habituel comme plaques de cuisson) à la pression, aux chocs (support et chute d'ustensiles, etc), etc.

Afin de remplir la ou les fonctions qui lui sont attribuées, la plaque en vitrocéramique est généralement munie d'accessoires ou éléments supplémentaires (décoratifs ou fonctionnels) requis pour son usage final (par exemple d'éléments de chauffage ou d'un bandeau de commande pour les plaques de cuisson), en particulier de composants électroniques, lesdits éléments ou accessoires étant généralement fixés sur la plaque de façon définitive, par encastrement dans un logement de la plaque prévu à cet effet, et/ou collage éventuel dans une zone distincte de celle des zones de chauffe éventuelles. La position et le choix des accessoires sont ainsi fixés à l'avance, et une fois la plaque et ses accessoires montés, si un élément est défectueux, le démontage de l'ensemble à l'aide d'outils spécifiques doit être opéré, voire la réparation implique de changer toute la plaque ou l'ensemble.

En outre, pour une plaque de grandes dimensions, le poids de la vitrocéramique est important et empêche une manipulation facile de ladite plaque en cas de problèmes ; par conséquent, l'utilisation de la vitrocéramique combinée à des composants électroniques pour réaliser des plans de travail ou des surfaces de meubles interactifs et/ou multi-usages pose des problèmes en terme de montage ou démontage des composants, notamment lorsqu'il s'agit de réaliser des installations à caractère modulable.

Les documents FR 2 258 353 A1, EP 1 106 931 A2, EP 2 865 949 A1, US 6 498 326 B1 divulguent des plaques vitrocéramiques connues dans l'état de l'art.

La présente invention a donc cherché à mettre au point une plaque permettant un montage et un démontage, en particulier d'équipement(s) électronique(s), plus simples, adaptés aux usages prévus pour cette plaque (dans un meuble et/ou comme plan de travail notamment), en particulier une plaque permettant de monter ou démonter à loisir, sans l'utilisation d'outils spécifiques et sans changer la plaque, différents types d'accessoires, le choix des accessoires pouvant en outre se faire à la commande, ou des accessoires pouvant être substitués à d'autres, selon son envie ou ses besoins, permettant ainsi d'obtenir le cas échéant une installation modulable.

Ce but a été atteint par les plaques vitrocéramiques selon les revendications indépendantes 1 et 2. Chaque plaque vitrocéramique est destinée en particulier à être utilisée comme surface de meuble et/ou plan de travail, et comprenant, en au moins l'une de ses faces (en particulier et avantageusement sa face inférieure (en position d'utilisation)), au moins un élément de connexion (ou connecteur) de hauteur (ou épaisseur) inférieure à 10 cm (de préférence inférieure à 6 cm, avantageusement inférieure ou égale à 4 cm) et dont la section (extérieure) s'inscrit dans un cercle de diamètre inférieur à 3 cm (de préférence inférieur à 2 cm), ledit élément de connexion étant formé d'un matériau résistant à au moins 70°C (et de préférence résistant à au moins 120°C) et comprenant au moins une partie (ou système de fixation) permettant une fixation suivant au moins deux axes (en particulier obtenue par (au moins) deux mouvements différents de translation(s) et/ou rotation(s)) et/ou (en au moins) deux mouvements et/ou apte à exercer une force orientée vers (ou en direction de) la plaque vitrocéramique.

Selon un exemple non couvert par les revendication, la partie ou système permettant une fixation (d'un élément rapporté comme indiqué par la suite) suivant au moins deux axes (en particulier obtenue par deux mouvements différents de translation(s) et/ou rotation(s)) et/ou deux mouvements et/ou apte à exercer une force orientée vers la plaque vitrocéramique, peut être formé(e), ou sous forme, d'une portion, en particulier non individualisée, de l'élément, par exemple une portion filetée ou une portion munie d'un système (par exemple d'encoches) permettant une fixation de type pivot glissant ou baïonnette, présente par exemple à l'extrémité de l'élément de fixation opposée à la partie dudit élément au contact de la plaque vitrocéramique, cette portion permettant la fixation, en particulier suivant au moins deux axes et/ou deux mouvements (par exemple fixation par baïonnette ou pivot glissant ou vissage, obtenue en particulier par translation et rotation) d'un élément complémentaire rapporté (fabriqué séparément puis assemblé), et/ou peut être formée d'un ou de composant(s) individualisé(s), par exemple distinct(s) de l'enveloppe formant l'élément mais faisant également partie dudit l'élément, tel(s) qu'un ressort à l'intérieur ou l'extérieur de l'enveloppe formant ledit élément, et exerçant une force en direction de la plaque, ces éléments permettant une fixation à la fois particulièrement solide et avantageusement amovible d'éléments et accessoires rapportés comme détaillé et illustré ultérieurement.

La présente invention concerne également un équipement mobilier et/ou ménager intégrant la plaque selon l'invention, et notamment une table (ou plan) de travail ou un meuble, ledit équipement étant formé d'au moins ladite plaque (notamment une plaque de grandes dimensions, en particulier de surface supérieure ou égale à 0.7 m², comme précisé ultérieurement), positionnée (en particulier horizontalement) sur un ou des éléments supports (caisson d'un meuble, pied(s) support(s)), afin d'offrir une surface stable. En particulier, la présente invention concerne une table ou un meuble comprenant une surface ou plateau, en particulier de grandes dimensions, formé(e) par la plaque selon l'invention et apte à permettre en simultané ou successivement différentes activités et/ou support d'objets. Ce meuble peut être par exemple un ilot central de pièce, par exemple un ilot de cuisine, ou tout plan ou table de travail pour différents usages, par exemple une paillasse de laboratoire, une table ou une table basse, ou encore un meuble de type console, crédence, un mobilier de rangement, un comptoir, etc.

En particulier, l'invention concerne un équipement mobilier et/ou ménager dans lequel la plaque occupe la majorité (plus de 50% de la surface de la face où elle se trouve, de préférence plus de 80%, en particulier plus de 90%), et de préférence la totalité (formant ainsi une surface continue) d'une face dudit équipement mobilier et/ou ménager, en particulier la face supérieure (en position d'utilisation), notamment horizontale, dudit équipement mobilier et/ou ménager, afin d'offrir une surface stable continue apte à permettre en simultané ou successivement des activités (telles que travail, jeux, lecture, etc.), le support d'objets (tels que papiers, ordinateurs, vases, vaisselle, etc.), éventuellement la préparation ou la cuisson ou le réchauffage d'aliments dans des récipients appropriés, et/ou tout autre usage lié à la destination du meuble. La plaque utilisée est en particulier et avantageusement monolithique et présente une épaisseur inférieure à 15 mm, un coefficient de dilatation inférieur à 30.10⁻⁷ K⁻¹ entre 20 et 400°C, et une surface supérieure ou égale à 0.7 m², pour une utilisation comme plan de travail ou grande surface de meuble, comme détaillé ultérieurement.

Comme indiqué selon l'invention, la plaque vitrocéramique mise au point comprend au moins un, et de préférence plusieurs, élément(s) de connexion sur au moins une de ses faces (de préférence essentiellement voire uniquement sur la face inférieure (ou face non apparente, en position d'utilisation) de la plaque). Chaque élément de connexion (apte à assurer la connexion avec un élément rapporté (c'est-à-dire avec un élément fabriqué séparément puis assemblé), en particulier complémentaire, comme explicité ultérieurement) peut être en une ou plusieurs parties (ces parties étant alors liées et/ou assemblées pour former ledit élément), au moins un ou plusieurs (et avantageusement la totalité) de ces éléments de connexion équipant la plaque présentant préférentiellement l'aspect extérieur de plot(s) ou pion(s) cylindrique(s), comprenant le cas échéant une ou des parties évidées et/ou muni(s) le cas échéant d'un ou ou plusieurs autres constituants extérieurs ou intérieurs, comme explicité et illustré ultérieurement.

Le ou les éléments de connexion sont avantageusement formés, notamment lorsque la plaque est destinée à être équipée d'éléments chauffants, en particulier d'inducteurs, sur au moins une partie (de préférence au moins la moitié, ou sur la totalité) de leur surface extérieure, de matériau(x) réfractaire(s), et/ou amagnétique(s), résistant à au moins 70°C et de préférence à au moins 120°C, par exemple sont formés d'une coque (ou enveloppe) externe (en particulier sous forme d'un plot ou d'un pion cylindrique au moins en partie évidé) en aluminium ou en graphite ou en carbure de silicium, ou en vermiculite ou fibres réfractaires, etc.

Avantageusement, la plaque comprend plusieurs éléments de connexion tels que précédemment définis, notamment positionnés (de façon plus ou moins uniforme selon les besoins) sous le dessous de la plaque, en particulier répartis sur l'ensemble de la face inférieure de la plaque.

Ces éléments sont par exemple assemblés à la plaque à l'aide d'une colle, telle qu'une colle de type silicone, époxy ou cyanoacrylate, en particulier d'une colle thermodurcissable présentant avantageusement un coefficient de dilatation (mesurée selon la norme ISO11359-2) inférieur à 900.10⁻⁷ K⁻¹ entre -40 et 80°C, et une résistance au cisaillement d'au moins 1 N/mm² (mesurée selon la norme ISO4587, sur aluminium), et de préférence d'au moins 10 N/mm². De préférence, la colle présente un coefficient de dilatation compris entre 500 et 900.10⁻⁷ K⁻¹ entre -40 et 80°C et une résistance au cisaillement de l'ordre de 1 à 50 N/mm², notamment de l'ordre de 10 à 50 N/mm². Cette colle est de préférence une colle de type époxy ou cyanoacrylate. Cette colle thermodurcissable permet de fixer de façon durable les connecteurs, en offrant un collage rigide offrant une meilleure résistance à diverses sollicitations. Le recours à ces colles particulières pour solidariser des éléments de connexion permettant eux-mêmes de rapporter l'équipement ou les accessoires voulus est particulièrement approprié et efficace, même dans des zones de chauffe éventuelles, tout en étant simple à mettre en œuvre et économique.

Comme évoqué précédemment, le ou les éléments de connexion sont aptes à assurer la connexion avec un élément rapporté, en particulier complémentaire, qu'il s'agisse directement d'un équipement ou accessoire à monter ou d'un contenant permettant de recevoir différents types d'équipements ou d'accessoires. Les faibles dimensions des éléments de connexion selon l'invention permettent à la fois de positionner lesdits éléments à différents endroits de la plaque sans poser des problèmes d'encombrement et pour offrir une structure modulable, et permettent également de positionner les éléments rapportés à proximité de la plaque afin qu'ils puissent exercer leur action en limitant les risques d'endommagement (rayures de la plaque liées aux manipulations possibles de ces éléments ou exposition éventuelle à la chaleur des composants électroniques, etc). De préférence, le ou les éléments de connexion présentent une hauteur inférieure à 6 cm, avantageusement inférieure ou égale à 4 cm, et d'au moins 5 mm, et leur section extérieure s'inscrit dans un cercle de diamètre inférieur à 2 cm.

Selon l'invention, au moins une partie (voire la totalité) des éléments de connexion sont aptes à recevoir, avantageusement de façon amovible, au moins une partie d'un élément (de) support (tel qu'un caisson ou plateau) devant recevoir un ou des accessoires à associer, ou, le cas échéant, sont aptes à recevoir au moins une partie d'un accessoire à associer directement. Le cas échéant, les éléments de connexion peuvent également être associés par paires ou par groupes, comme illustré ultérieurement, certains de ses éléments (ou premiers éléments) devant recevoir chacun au moins une première partie du ou des éléments (supports et/ou accessoires) rapportés (et présentant une forme ou structure appropriée pour recevoir cette partie), et d'autres éléments (second éléments) devant recevoir chacun au moins une seconde partie - différente de la première partie - du ou des éléments rapportés (et présentant une forme ou structure appropriée, le cas échéant différente de celle des premiers éléments de connexion, pour recevoir cette partie), les éléments de connexion associés par groupes comprenant le cas échéant sur le même principe des troisièmes éléments, voire des quatrièmes, etc, selon le mode d'assemblage des éléments à rapporter envisagé.

Conformément à l'invention, au moins un élément de connexion, ou plusieurs éléments de connexion (voire tous les éléments de connexion le cas échéant), comprend (respectivement comprennent chacun) au moins un système de fixation permettant une fixation (d'élément(s) à rapporter) suivant au moins deux axes (en particulier obtenue par au moins deux mouvements différents de translation(s) et/ou rotation(s)) et/ou deux mouvements et/ou apte à exercer une force orientée vers la plaque vitrocéramique (également pour la fixation d'élément(s) à rapporter). Selon l'invention, le ou les éléments à rapporter (formés séparément et assemblés à la plaque par l'intermédiaire des connecteurs) sont également chacun pourvus d'au moins un moyen (ou organe ou pièce ou partie) de fixation (ou de couplage ou d'accrochage) complémentaire dudit système de fixation appartenant à l'élément de connexion ou aux éléments de connexion précités. Le ou les éléments de connexion ainsi pourvus sont apte(s) à recevoir chacun, avantageusement de façon amovible, au moins le moyen de fixation complémentaire d'un élément à rapporter (ou coupler). L'élément à rapporter muni d'un moyen de fixation complémentaire est de préférence un élément support (tel qu'un caisson ou plateau) devant recevoir un ou des accessoires à associer, permettant ainsi d'associer selon les besoins différents types d'accessoires, en particulier usuels ou ne présentant pas de structure particulière pour l'assemblage. Alternativement, l'élément à rapporter muni d'un moyen de fixation complémentaire peut également être directement un accessoire, présentant ou conçu pour présenter dans ce cas ledit moyen de fixation complémentaire.

Les accessoires à associer peuvent être par exemple un ou des éléments de chauffage (par exemple des bobines à induction), des systèmes d'affichage, des cartes électroniques, des sources lumineuses, des boitiers ou des interfaces de commande, des capteurs, des chargeurs sans fil, etc. Le ou les éléments supports peuvent se présenter notamment sous forme de plateau(x) ou boitier(s) ou caisson(s), par exemple en aluminium ou en plastique, destiné(s) à recevoir les accessoires à coupler à la plaque, ces plateaux ou boitiers selon les cas pouvant être entièrement dissociés de la plaque et de ses connecteurs, ou pouvant être détachés d'un ou plusieurs connecteurs sur au moins une partie, tout en restant reliés en une autre partie à d'autre(s) connecteur(s) (lorsque les connecteurs sont associés par groupes comme évoqué précédemment), ce(s) élément(s) support(s) pouvant le cas échéant faire partie de la plaque et/ou de connecteur(s), ou bien pouvant être rapporté(s) en cas de besoin.

Le système de fixation prévu sur un ou des éléments de connexion est conçu de façon à permettre une fixation suivant au moins deux axes (en particulier obtenue par deux mouvements différents de translation(s) et/ou rotation(s)) et/ou deux mouvements et/ou de façon à exercer une force orientée vers la plaque vitrocéramique (également pour la fixation d'élément(s) à rapporter) et peut être formé de différents moyens et/ou parties et/ou éléments de l'élément de connexion combinés entre eux de façon à obtenir la fixation recherchée (suivant au moins deux axes et/ou deux mouvements et/ou avec une force s'exerçant vers la plaque vitrocéramique, ces actions permettant notamment, chacune ou en combinaison, de bloquer et maintenir efficacement les éléments rapportés). De préférence, lorsque notamment le système de fixation est conçu de façon à exercer une force orientée vers la plaque vitrocéramique, la direction d'introduction du moyen de fixation de l'élément à rapporter dans l'élément de connexion est avantageusement différente de, en particulier perpendiculaire à, la direction de ladite force exercée par le moyen de blocage.

Le système de fixation peut être par exemple formé d'au moins une cavité pour recevoir le moyen de fixation de l'élément à rapporter, combinée à au moins un moyen de blocage (pouvant le cas échéant être retiré ou débloqué en cas de besoin) dudit moyen de fixation une fois en place dans le connecteur, ledit moyen de blocage exerçant une force orientée vers la plaque vitrocéramique, la direction d'introduction du moyen de fixation de l'élément à rapporter dans l'élément de connexion étant préférentiellement différente de, en particulier perpendiculaire à, la direction de ladite force exercée par le moyen de blocage.

Selon un mode de réalistion de l'invention, le moyen de blocage est formé par la combinaison d'un élément de pression sous la forme d'un ressort, à l'extérieur ou l'intérieur de la coque cylindrique formant (en partie) l'élément de connexion, avec un élément de butée sous la forme d'une goupille, maintenant le ressort en compression une fois le moyen de fixation de l'élément rapporté introduit dans une cavité de l'élément de connexion, comme illustré ultérieurement, le retrait de la goupille pouvant ensuite permettre l'extraction de l'élément rapporté en cas de besoin.

Selon un autre mode de réalisation de l'invention, le moyen de blocage est un aimant (le moyen de fixation de l'élément rapporté étant dans ce cas dans un matériau adapté, tel qu'un matériau ferromagnétique) ou alternativement peut être une partie ou un composant de l'élément de connexion en un matériau apte à être attiré par un aimant, tel qu'un matériau ferromagnétique, le moyen de fixation de l'élément rapporté comprenant alors un aimant ou une partie aimantée.

Le système de fixation peut également être, par exemple, une extrémité de l'élément de connexion (notamment opposée à celle au contact de la plaque vitrocéramique ou latérale) qui est filetée ou munie d'un système (par exemple d'encoches) permettant une fixation de type baïonnette ou pivot glissant, non couvert par l'invention, cette extrémité permettant la fixation (par baïonnette/pivot glissant ou vissage) suivant au moins deux axes et/ou deux mouvements d'un élément complémentaire rapporté, l'élément rapporté ne pouvant ainsi être inséré ou extrait qu'en opérant un ou des mouvements suivant au moins deux axes (en particulier en translation et rotation) et/ou deux mouvements, et non en opérant une simple introduction, ou inversement traction, dans une seule direction.

Comme précédemment indiqué, la plaque vitrocéramique sur laquelle le ou les éléments de connexion sont fixés est avantageusement monolithique (ou monobloc ou d'un seul tenant), en particulier essentiellement plane, et présente une épaisseur inférieure à 15 mm, en particulier inférieure à 12 mm, notamment inférieure ou égale à 6 mm, et un coefficient de dilatation inférieur à 30.10⁻⁷ K⁻¹ entre 20 et 400°C (et de préférence inférieur à 13.10⁻⁷ K⁻¹ entre 20 et 400°C).

La présence des connecteurs et des accessoires avantageusement en face inférieure permet le cas échant de cacher les éléments inesthétiques, d'offrir une surface apparente d'entretien facilité et de garantir une meilleure pérennité des accessoires de la plaque, etc. La plaque vitrocéramique offre ainsi une surface majoritairement continue/uniforme/sans raccords, esthétique et d'entretien facile. Elle peut être munie de revêtements de décoration ou fonctionnels de faible épaisseur (notamment de l'ordre de quelques dizaines de nanomètres à quelques centaines de microns, voire plus), par exemple en émail, peinture, couches minces, etc, et/ou d'autres éléments, rapportés ou non aux connecteurs précités.

Le cas échéant, la plaque peut présenter une surface (correspondant au produit de sa longueur par sa largeur) pour sa face de plus grandes dimensions destinée à être apparente et à servir de support d'articles (ménagers ou de travail), de dimensions supérieures à 0.4 m², notamment supérieures à 0.7 m², voire supérieures à 1 m², en particulier supérieures ou égales à 2 m², pour une utilisation en tant que plan de travail ou surface de meuble. La plaque présente également préférentiellement dans ce cas l'une et/ou l'autre des caractéristiques suivantes (les bornes données étant incluses): module d'Young compris entre 80 et 100 GPa (mesuré selon la norme ASTM C 1259), résistance à la flexion comprise entre 110 et 220 MPa (mesurée par test anneau sur tripode, sur une plaque de 70 mm × 70 mm × 4 mm, l'échantillon reposant sur 3 billes de 9.5 mm de diamètre positionnées au sommet d'un triangle équilatéral inscrit dans un cercle de 40 mm de diamètre, une force étant appliquée au centre de l'échantillon par un anneau de 10 mm de diamètre avec une avancée de 5 mm/min, les résultats étant interprétés avec le modèle de Weibull décrit dans : « A statistical distribution of strength of Materials », Royal Swedish Institute For Engineering Research, W. Weibull, Stockholm 1939, 1-45, la donnée obtenue, aussi appelée « facteur d'échelle », révélatrice de la contrainte moyenne à rupture et résultant du dépouillement par la méthode Weibull des mesures de module de rupture en flexion (MOR), étant exprimée en MPa), conductivité thermique inférieure à 2 W/m.K (mesurée notamment selon la norme DIN 51936), résistance aux chocs thermiques comprise entre 250 et 700°C, densité comprise entre 2.3 et 2.7, résistance aux acides comprise entre 0 et 2 mg/cm² (mesurée selon la norme DIN12116), et résistance aux bases comprise entre 0 et 1 mg/cm² (mesurée selon la norme ISO 695).

La plaque vitrocéramique utilisée est préférentiellement plane (ou majoritairement ou quasiment plane), et présente en particulier une planéité (hauteur entre le point le plus haut et le point le plus bas du substrat par rapport au plan moyen du substrat, à l'exception des déformations volontaires éventuelles opérées sur le substrat à des fins esthétiques ou fonctionnelles) inférieure à 0,1% de la diagonale du substrat, et de préférence inférieure à 3 mm, notamment inférieure à 2 mm, en particulier inférieure à 1 mm, voire de l'ordre de zéro, en fonction de la taille/surface/diagonale du substrat, la planéité étant mesurée à l'aide d'un ondulomètre de référence SurFlat commercialisé par la société Visuol. Elle est généralement de forme géométrique, en particulier rectangulaire, voire carrée, voire circulaire ou ovale, etc., et présente généralement une face "supérieure" (face visible) en position d'utilisation, une autre face "inférieure" (généralement cachée, dans un châssis ou caisson) en position d'utilisation, et une tranche (ou chant ou épaisseur). La face supérieure est généralement plane et lisse mais peut aussi présenter au moins une zone en relief et/ou au moins une zone en creux et/ou au moins une ouverture et/ou des bords biseautés, etc, ces variations de forme constituant avantageusement des variations continues de la plaque (sans changement de matériaux ou raccords). La face inférieure est de préférence lisse, voire munie de picots (les connecteurs pouvant dans ce cas être collés par une colle servant alors également de matériau de remplissage, ou la plaque comprenant un autre matériau de remplissage approprié, tel qu'une résine ou un film auto-nivelant).

L'épaisseur de la plaque vitrocéramique est généralement d'au moins 2 mm, notamment d'au moins 2.5 mm, en particulier est de l'ordre de 3 à 15 mm.

La vitrocéramique peut être de couleur sombre (noire, brun foncé) ou claire (blanc, crème), et peut être translucide ou opaque ou transparente selon l'usage et l'esthétique désirés. Il s'agit en particulier d'une vitrocéramique d'aluminosilicate de lithium. Elle peut être notamment affinée à l'arsenic (c'est-à-dire de (verre mère de) composition comprenant de l'ordre de 0.5 % à 1.5% en poids d'oxyde d'arsenic (exprimé en As₂O₃), ou peut être non affinée à l'arsenic (en particulier présentant un taux d'oxydes d'arsenic inférieur à 0.2 %, en particulier inférieur à 0.1%, voire nul) ou affinée à l'étain ou affinée au(x) sulfure(s), et peut être obtenue par laminage ou par flottage.

Comme indiqué précédemment, la plaque peut comporter le cas échéant divers revêtements fonctionnels et/ou décoratifs, notamment parmi ceux généralement utilisés avec les vitrocéramiques, par exemple à base d'émail, de peinture, de couche(s) mince(s) (par exemple métallique(s), diélectrique(s), etc.), etc. Par exemple, l'une des faces peut comporter une ou des couches ou un ou des motifs en émail, à but décoratif et/ou afin de signaler un ou des éléments (afficheurs, etc.), et/ou servant de masquage (pour éviter par exemple la vision directe de sources lumineuses), et/ou pour d'autres fonctions (comme extracteur de lumière ou pour homogénéiser un éclairage, etc.). La plaque peut également être munie d'une couche fonctionnelle lui conférant une ou des propriétés supplémentaires telles qu'anti-rayures, renforcement mécanique, anti-traces, anti-débordement, etc. le ou les revêtements pouvant se trouver notamment sur la face apparente ou sur la face opposée, selon le type de revêtement et la fonction recherchée.

La plaque peut être équipée, en particulier et avantageusement par l'intermédiaire des connecteurs, de différents éléments (ou accessoires) permettant divers usages afin de former notamment un meuble ou plan de travail interactif modulable.

Par exemple, elle peut être équipée d'une ou plusieurs sources lumineuses, notamment formées par des diodes électroluminescentes, et destinées par exemple à matérialiser (rendre visible) une ou des zones ou un ou des éléments ou affichages de la plaque, notamment par transmission lumineuse au travers de la plaque. Ces sources peuvent notamment permettre l'affichage de commandes (sous forme de touches, logos, voire claviers, etc.), activables par exemple par contact sur la surface de la plaque (à l'aide par exemple de capteurs situés sous la surface et pouvant également être rapportés par l'intermédiaire des connecteurs) ou à distance (notamment par communication sans fil), voire par simple mouvement de la main (par capteurs situés le cas échéant à l'extérieur et enregistrant le mouvement, par exemple par triangulation, pour le convertir, à l'aide notamment d'un algorithme et d'une interface adaptés, en l'activation d'une fonction par exemple), ou le cas échéant par la pose d'un objet déterminé à un emplacement déterminé de la plaque. La ou les sources lumineuses peuvent également permettre l'affichage de décors, ou de données diverses (affichage par exemple de pages d'ordinateurs, de recettes de cuisine, etc.) téléchargées par exemple par communication sans fil en utilisant une interface appropriée et projetées ou transmises à partir des sources lumineuses à la surface de la plaque.

La plaque peut également être équipée d'un ou plusieurs éléments de chauffage, tels que des bobines à induction, des éléments radiants, activables également de différentes façons comme décrit pour les sources lumineuses, et peut également être équipée d'interface(s) de communication avec au moins un élément adjacent (par exemple les sources lumineuses ou éléments chauffants), et/ou le cas échéant avec au moins un élément extérieur, par exemple avec un module extérieur pour une communication sans fil, la ou lesdites interfaces étant par exemple un boitier de commande, une tablette ou un écran tactile, un système de type Bluetooth, WLAN, wifi, puce RFID, Lifi, etc.

La plaque peut également être équipée d'autres éléments, tels qu'un ou des guides d'onde, ainsi que de différents autres composants, en particulier électriques et/ou électroniques, tels qu'un chargeur (par exemple de téléphone, bobine d'induction, etc.), un ou des câbles, un composant sonore ou vibrant (signalant par exemple l'approche d'un objet de type casserole), etc.

La solution apportée par la présente invention est particulièrement avantageuse, comme évoqué précédemment. Les faibles dimensions du ou des éléments de connexion et la possibilité de les positionner en divers endroits, combinés au choix des matériaux utilisés et aux modes de fixation sélectionnés pour rapporter le ou les accessoires à coupler à une distance leur permettant d'exercer leur action éventuelle sans risques de dégradations par frottement ou par la chaleur desdits accessoires, permettent d'offrir une solution au problème posé convenant à tous types de plaques vitrocéramiques et permettent d'envisager le montage et/ou démontage de différents types d'accessoires, sans nécessiter d'installations ou d'outillages complexes, ni de manipulation de plaques, en particulier de poids et de dimensions importantes. Le produit mis au point selon l'invention répond ainsi au but recherché, en proposant un mode d'assemblage permettant de connecter différents types d'éléments en différents endroits de la plaque, de façon le cas échéant amovible, sans que l'installation pose des problèmes d'encombrements ni d'interférences avec certains accessoires combinés à la plaque (tels que les éléments de chauffage éventuels qu'ils soient radiants ou à induction), et tout en permettant aux accessoires associés d'exercer leur fonction en combinaison avec la plaque (tel que l'éclairage de zones de chauffe ou l'affichage de données par des éléments rapportés sous la plaque, etc), la solution proposée permettant également de changer le cas échéant les accessoires selon les besoins ou la destination de la plaque.

La plaque selon l'invention est fabriquée notamment à partir de plaques vitrocéramiques, en particulier de grandes dimensions, obtenues par céramisation, en effectuant notamment le collage du ou des éléments de connexion à la surface des vitrocéramiques à l'aide d'une colle thermodurcissable.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques, déjà découpées ou non, sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 750°C (voire au delà). La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante.

Afin d'obtenir des plaques de grandes dimensions selon l'invention, en particulier des plaques de surface supérieure à 0.7 m2, on réduit préférentiellement, pendant le cycle de céramisation, la vitesse de passage d'au moins 25%, de préférence d'au moins 50%, ou on augmente la longueur de l'arche de céramisation ou le temps de séjour dans ladite arche d'au moins 25%, de préférence d'au moins 50%, par rapport respectivement à la vitesse, la longueur ou le temps de séjour optimaux ou usuels pour obtenir un substrat en vitrocéramique de surface inférieure à 0.4 m².

Le cas échéant, le procédé comprend également une opération de découpe (généralement avant céramisation), par exemple par jet d'eau, traçage mécanique à la molette, etc. suivie par une opération de façonnage (meulage, biseautage,...). Le procédé peut également comprendre une étape de laminage ou effondrement pour former des reliefs particuliers.

La présente invention concerne également un procédé d'assemblage (ou de montage ou de fixation) d'un élément rapporté ou d'un accessoire à la plaque précédemment définie selon l'invention, selon lequel l'élément rapporté ou l'accessoire est monté, avantageusement de façon amovible, sur au moins un élément de connexion de la plaque en opérant un ou des mouvements (dudit élément rapporté par rapport à l'élément de connexion) suivant au moins deux axes différents (ou au moins deux directions différentes) et/ou en opérant au moins deux mouvements, en particulier en translation(s) et/ou rotation(s) (notamment en translation et rotation), par exemple au moins un vissage ou un montage par baïonnette ou pivot glissant, et/ou en exerçant une force, sur au moins une partie de l'élément rapporté, orientée vers la plaque vitrocéramique, la direction d'introduction (du moyen de fixation) de l'élément à rapporter dans l'élément de connexion étant préférentiellement différente de, en particulier perpendiculaire à, la direction de ladite force.

D'autres détails et caractéristiques avantageuses de l'invention ressortiront ci-après de la description de modes de réalisation non limitatifs de l'invention en référence aux dessins annexés dans lesquels :
- La figure 1a représente une vue schématique en perspective (vue de dessus) d'une plaque selon l'invention suivant un premier mode de réalisation;
- La figure 1b représente une coupe schématique de ladite plaque suivant l'axe d'un des éléments de connexion représenté en figure 1a lorsqu'un élément support devant recevoir un ou des équipements ou accessoires à associer est rapporté et fixé à la plaque par l'intermédiaire de l'élément de connexion;
- La figure 1c représente une coupe schématique d'une variante de la figure 1b, lorsque qu'il est procédé cette fois au démontage d'un élément support préalablement fixé par l'intermédiaire d'un élément de connexion;
- La figure 2a représente une vue schématique (de dessous) d'une variante du mode de réalisation précédent, avec un élément support (recevant un ou des équipements ou accessoires à associer- non représentés) fixé sur plusieurs connecteurs;
- La figure 2b représente une vue de dessous des éléments de connexion représentés en figure 2a avec l'élément support fixé sur lesdits éléments;
- La figure 3a représente une coupe schématique d'un deuxième mode de réalisation d'une plaque selon l'invention;
- La figure 3b représente une variante du mode de réalisation de la figure 3a.

Les mêmes références sont utilisées dans l'ensemble des figures pour désigner les mêmes types d'éléments.

Dans chacune des figures précitées, la plaque (1) selon l'invention est une plaque monolithique en vitrocéramique (par exemple une plaque du type de celle commercialisée sous la référence KeraBlack+ par la société Eurokera), cette plaque présentant une face supérieure et une face inférieure lisses, et présentant par exemple une épaisseur de 6 mm et une surface de 0.78 m², et étant en particulier obtenue en procédant comme dans la demande de brevet WO 2012156444 en réduisant la vitesse de passage dans l'arche de céramisation de 50% pour obtenir ladite plaque de grandes dimensions sans défauts de planéité.

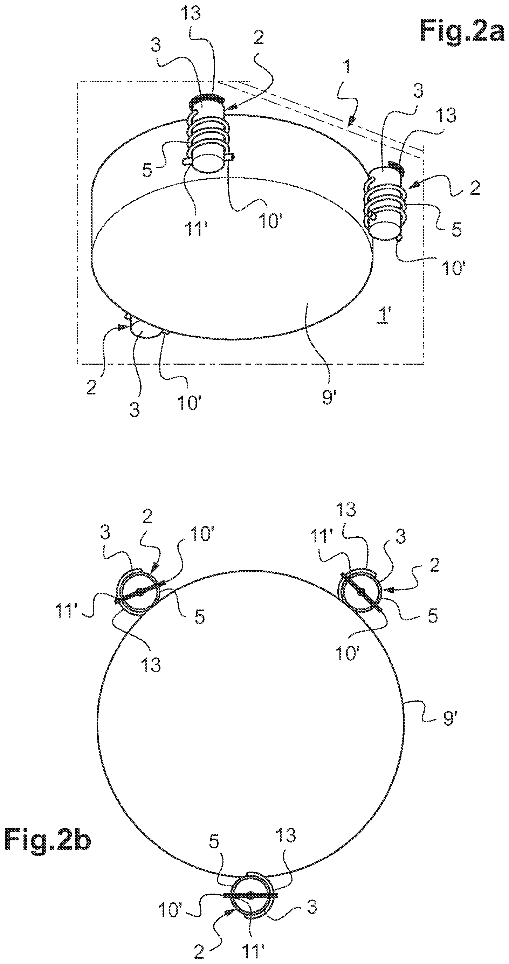

Dans chaque mode de réalisation illustré, les plaques vitrocéramiques (1), destinées notamment à servir de surfaces de meuble ou grand plans de travail, sont munies, sur leur face inférieure (1'), de plusieurs éléments de connexion (2) comprenant chacun au moins une coque ou un corps cylindrique (3) en particulier creux ou semi-creux, chaque élément de connexion étant collé sous le dessous (ou face inférieure en position d'utilisation) de la plaque au moyen d'une colle thermodurcissable (4) (non apparente/non représentée en figure 2a et 2b mais présente à la base des connecteurs entre les connecteurs et la plaque) présentant un coefficient de dilatation inférieur à 900.10⁻⁷ K⁻¹ entre -40 et 80°C et une résistance au cisaillement supérieure à 10 N/mm², telle qu'une colle de type époxy commercialisée sous la référence Loctite EA 9492 par la société Henkel, ou une colle de type cyanoacrylate commercialisée sous la référence Loctite 480 par la société Henkel.

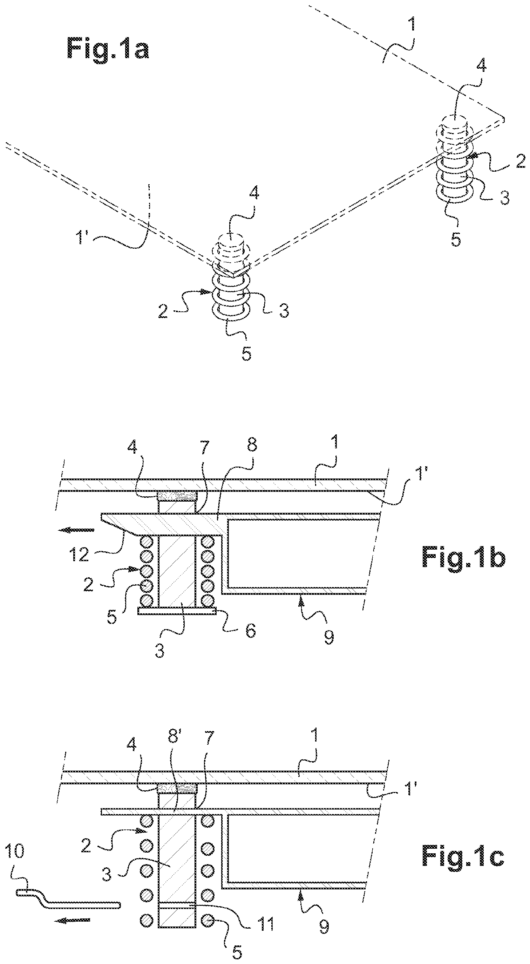

Dans le premier mode de réalisation illustré en figures 1a à 1c, la plaque est munie de plusieurs éléments de connexion (2) identiques ou similaires (deux d'entre eux sont représentés en figure 1a, ces éléments pouvant se trouver à n'importe quel endroit sous la plaque, les contours de la plaque pouvant aller au-delà de ceux schématiquement représentés en figure 1a), formés chacun d'au moins un corps cylindrique (3) de 10 mm de diamètre et de 4 cm de hauteur, par exemple en un matériau amagnétique tel que de l'aluminium, et d'au moins un ressort (5), par exemple en inox, présentant par exemple une longueur libre de 34 mm et une force maximum de 48 N, fixé audit corps cylindrique (par exemple fixé à l'extérieur ou l'intérieur du corps cylindrique ou sur une base (6) fixée également, à demeure ou de manière amovible, sur le corps cylindrique). Le corps cylindrique présente une ouverture (7) transversale, par exemple traversante, à environ 3 mm de la face inférieure de la plaque, afin de pouvoir introduire une partie (8, 8') d'un élément support (9), de dimensions appropriées pour pouvoir se loger dans cette ouverture.

L'élément support (9) se présente par exemple sous forme d'un caisson rectangulaire en aluminium ou en plastique de 19 × 26 cm et d'épaisseur (de parois latérales) de 12 mm, et est destiné à recevoir un ou des équipements ou accessoires tels que des bobines d'induction, un boitier électronique, etc. La partie (8,8') dudit élément support constitue un moyen de fixation complémentaire du système de fixation prévu dans chaque élément de connexion, ledit système de fixation étant par exemple formé par la combinaison du ressort (5) et de l'ouverture (7) dans le mode de réalisation en figure 1b (la base pouvant également faire partie de ce système de fixation), ou étant formé par la combinaison du ressort (5), de l'ouverture (7), d'une goupille (10) et d'une seconde ouverture (11) transversale traversante vers l'extrémité inférieure de l'élément de connexion dans le mode de réalisation en figure 1c.

Ainsi, dans le mode de réalisation en figure 1b, lors du montage de l'élément support portant les équipements ou accessoires, la forme particulière de l'extrémité (12) de cette partie (8) (ou moyen de fixation (8)) de l'élément support (9) permet son introduction (dans le sens de la flèche) dans l'ouverture (7) du connecteur (2) tout en comprimant progressivement le ressort (5) jusqu'à une position où le ressort bloque la dite partie en exerçant une force sur ladite partie, cette force exercée par le ressort de l'élément de connexion étant perpendiculaire à la direction d'introduction de l'élément rapporté (9) et s'exerçant en direction de la plaque conformément à l'un des modes de fixation selon l'invention. Si un démontage ou changement d'équipements est nécessaire, l'élément support peut être retiré en tirant dans le sens inverse de celui d'introduction libérant ainsi le ressort et l'élément support.

Dans la variante illustrée en figure 1c, représentant également un mode de fixation de façon amovible, lors du montage de l'élément support portant les équipements ou accessoires, la partie (ou moyen de fixation) (8') de l'élément support (9) est introduite dans l'ouverture (7) du connecteur (2), puis une goupille (10) est introduite dans l'ouverture (11) en bas du connecteur tout en comprimant le ressort (5) de façon à ce que le ressort bloque la partie (8') de l'élément support en exerçant une force sur ladite partie, perpendiculaire à la direction d'introduction de cette partie et en direction de la plaque conformément à l'un des modes de fixation selon l'invention. Si un démontage ou changement d'équipements est nécessaire, l'élément support peut être retiré en tirant sur la goupille (dans le sens indiqué par la flèche) libérant ainsi le ressort et l'élément support qui peut être retiré.

La base (6) en figure 1b fait également office de goupille amovible et fait partie du système de fixation du connecteur.

Dans un autre exemple, non couvert par l'invention, l'ouverture latérale (7) ou l'ouverture à l'extrémité libre de l'élément (à l'emplacement de la base (6)) peut également être remplacée par au moins une encoche de forme permettant une fixation par baïonnette ou pivot glissant, la partie (8, 8') de l'élément support étant alors munie d'au moins une forme complémentaire pouvant s'engager dans l'encoche suivant un premier mouvement et venir se bloquer par un second mouvement dans ladite encoche (fixation par mouvements de type pousser-tourner notamment), ou peut être remplacée par un filetage, la partie (8, 8') de l'élément support étant alors apte à de visser autour dudit filetage, la fixation dans ces deux alternatives s'opérant alors suivant deux mouvements différents et/ou axes, par mouvements de translation et rotation, conformément à un autre mode de fixation selon l'invention.

Dans le mode de réalisation ou variante illustré(e) en figure 2a et 2b, la plaque est munie d'éléments de connexion (2) identiques ou similaires, associés par groupes de trois, chacun étant formé comme dans le mode de réalisation précédente d'un corps cylindrique (3) et d'un ressort (5) (par exemple de mêmes matériau et dimensions que précédemment) fixé audit corps cylindrique.

L'élément support (9') se présente par exemple sous forme d'un caisson rond de 21.5 cm de diamètre en polycarbonate, et est destiné à recevoir un ou des équipements ou accessoires tels que des bobines d'induction, un boitier électronique, etc. Ce caisson est muni de trois crochets externes (13) constituant des moyens de fixation complémentaires des systèmes de fixation prévus dans les éléments de connexion, chacun desdits systèmes de fixation étant par exemple formé par la combinaison du ressort (5), d'une goupille (10') et d'une ouverture (11') transversale traversante vers l'extrémité inférieure de l'élément de connexion.

Ainsi, lors du montage de l'élément support (9') portant les équipements ou accessoires, ledit élément support est amené par le dessous entre les connecteurs (2), avec les crochets positionnés entre les connecteurs, puis l'élément support est pivoté de façon à ce que chaque crochet vienne simultanément entourer l'un des connecteurs. Une goupille (10') est ensuite introduite dans chacun des connecteurs dans l'ouverture (11') prévue en bas de chacun des connecteurs, tout en comprimant le ressort (5) associé de façon à ce que le ressort bloque le crochet concerné en exerçant une force sur ledit crochet en direction de la plaque bloquant ainsi l'élément support en position, la force étant en outre perpendiculaire à la direction d'introduction (ou d'amenée) dudit crochet. Si un démontage ou changement d'équipements est nécessaire, l'élément support peut être retiré en tirant sur les goupilles libérant ainsi les ressorts et effectuant les mouvements (rotation et translation) inverses.

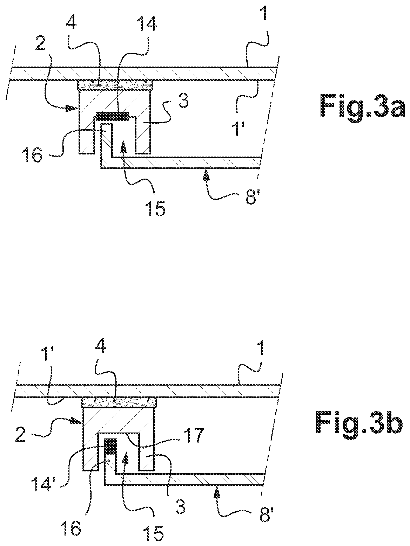

Dans le deuxième mode de réalisation illustré en figures 3a à 3b, représentant également un mode de fixation de façon amovible, la plaque (1) est munie de plusieurs éléments de connexion (2) identiques ou similaires, formés chacun d'au moins un corps cylindrique (3), creux à sa base, de 2 mm de diamètre et de 10 mm de hauteur, par exemple en un matériau amagnétique tel que de l'aluminium, et d'au moins un aimant (14), fixé (par exemple par collage ou encastrement) dans la cavité (15) à la base du connecteur (2).

L'élément support destiné à recevoir un ou des équipements ou accessoires se présente par exemple sous forme d'un caisson ou boitier en aluminium ou en plastique et présente une partie (8') avec une extrémité (16) apte à venir se loger dans la cavité (15) du connecteur, cette extrémité étant formée par exemple ou revêtue d'un matériau ferromagnétique et formant un moyen de fixation complémentaire du système de fixation prévu dans chaque élément de connexion, ledit système de fixation étant par exemple formé par la combinaison de la cavité et de l'aimant, l'aimant exerçant une force sur la partie (16) en direction de la plaque conformément à l'un des modes de réalisation de l'invention.

Dans la variante en figure 3b, l'aimant/la partie aimantée (14') se trouve cette fois sur l'extrémité (16) de l'élément support associée à l'élément de connexion, l'élément de connexion présentant dans ce cas une surface intérieure (17) de la cavité en un matériau ferromagnétique, par exemple ladite surface intérieure étant revêtue d'un feuillet ferromagnétique, collé le cas échéant sur ladite surface, ou d'une peinture à base de particules magnétiques, la fixation s'opérant entre l'extrémité (16) de l'élément support et l'élément de connexion avec une force orientée vers la plaque vitrocéramique.

Dans une autre variante non couverte par l'invention, la cavité (15) ou une partie latérale de l'élément de connexion (2) peut également être conçue de façon à présenter un profil permettant une fixation par baïonnette ou pivot glissant, la partie (8', 16) de l'élément support étant alors munie d'au moins une forme complémentaire pouvant s'engager dans cette partie de l'élément de connexion suivant un premier mouvement et venir se bloquer par un second mouvement (mouvements de type pousser-tourner ou translation-rotation), ou un filetage peut être prévu à l'emplacement de la cavité ou sur une partie latérale de l'élément de connexion, la partie (8',16) de l'élément support étant alors apte à de visser autour dudit filetage, la fixation dans ces deux alternatives s'opérant alors suivant deux mouvements différents et/ou axes, conformément à un autre mode de fixation selon l'invention.

La plaque selon l'invention peut notamment être utilisée avec avantages pour réaliser une nouvelle gamme de meubles ou dispositifs de cuisson.

## Revendications

1. Plaque vitrocéramique (1), destinée en particulier à être utilisée comme surface de meuble et/ou plan de travail, et comprenant, en au moins l'une de ses faces, en particulier sa face inférieure (1'), au moins un élément de connexion (2) de hauteur inférieure à 10 cm et dont la section s'inscrit dans un cercle de diamètre inférieur à 3 cm, ledit élément de connexion étant formé d'un matériau résistant à au moins 70°C et comprenant au moins un système de fixation permettant une fixation suivant au moins deux axes et/ou deux mouvements, en particulier obtenue par au moins deux mouvements différents de translation et/ou rotation, et/ou apte à exercer une force orientée vers la plaque vitrocéramique, ledit élément de connexion ou au moins une partie desdits éléments de connexion sont aptes à recevoir, avantageusement de façon amovible, au moins un ou des éléments à rapporter (8'), en particulier au moins une partie d'un élément support (9) devant recevoir un ou des accessoires à associer ou au moins une partie d'un accessoire à associer, le ou les éléments à rapporter sont chacun pourvus d'au moins un moyen de fixation complémentaire du système de fixation appartenant audit élément de connexion **caractérisée en ce que** le système de fixation est formé par la combinaison d'au moins un élément de pression sous la forme d'un ressort (5), avec un élément de butée sous la forme d'une goupille (10, 10') maintenant le ressort en compression une fois le moyen de fixation de l'élément rapporté introduit dans l'élément de connexion.

2. Plaque vitrocéramique (1), destinée en particulier à être utilisée comme surface de meuble et/ou plan de travail, et comprenant, en au moins l'une de ses faces, en particulier sa face inférieure (1'), au moins un élément de connexion (2) de hauteur inférieure à 10 cm et dont la section s'inscrit dans un cercle de diamètre inférieur à 3 cm, ledit élément de connexion étant formé d'un matériau résistant à au moins 70°C et comprenant au moins un système de fixation permettant une fixation apte à exercer une force orientée vers la plaque vitrocéramique, ledit élément de connexion étant apte à recevoir, avantageusement de façon amovible, au moins un ou des éléments à rapporter, en particulier au moins une partie d'un élément support devant recevoir un ou des accessoires à associer ou au moins une partie d'un accessoire à associer, **caractérisée en ce que** ladite au moins une partie desdits éléments de connexion comprend un corps cylindrique (3) creux muni d'une cavité (15) dont la surface intérieure est en matériau ferromagnétique et ledit au moins un ou des éléments à rapporter comprend une partie avec une extrémité (16) aimantée (14') apte à venir se loger dans la cavité ou en que ce ladite au moins une partie desdits éléments de connexion comprend un corps cylindrique (3) creux muni d'une cavité (15) dans laquelle un aimant (14) est fixé et ledit au moins un ou des éléments à rapporter comprend une partie avec une extrémité (16) en matériau ferromagnétique apte à venir se loger dans la cavité

3. Plaque vitrocéramique selon les revendications 1 ou 2, **caractérisée en ce que** ledit élément de connexion présente une hauteur inférieure à 6 cm, avantageusement inférieure ou égale à 4 cm, et une section s'inscrivant dans un cercle de diamètre inférieur à 2 cm.

4. Plaque vitrocéramique selon l'une des revendications 1 à 3, **caractérisée en ce que** ledit élément de connexion est en une ou plusieurs parties, et présente l'aspect extérieur d'un plot ou pion cylindrique, comprenant le cas échéant une ou des parties évidées et/ou muni le cas échéant d'un ou ou plusieurs autres constituants extérieurs ou intérieurs.

5. Plaque vitrocéramique selon l'une des revendications 1 à 4, **caractérisée en ce que** ledit élément de connexion est formé, au moins en partie, de matériau(x) réfractaire(s), et/ou amagnétique(s).

6. Plaque vitrocéramique selon l'une des revendications 1 à 5, **caractérisée en ce que** la plaque comprend plusieurs éléments de connexion positionnés sous la face inférieure de la plaque.

7. Plaque vitrocéramique selon l'une des revendications 1 à 6, **caractérisée en ce que** ladite plaque est une plaque monolithique présentant une épaisseur inférieure à 15 mm, un coefficient de dilatation inférieur à 30.10⁻⁷ K⁻¹ entre 20 et 400°C, et une surface supérieure ou égale à 0.7 m²

8. Equipement mobilier et/ou ménager, en particulier plan de travail ou meuble, comprenant au moins une plaque vitrocéramique selon l'une des revendications 1 à 7.

9. Equipement mobilier et/ou ménager selon la revendication 10, **caractérisé en ce que** ladite plaque occupe au moins 50%, voire la totalité d'une face dudit équipement mobilier et/ou ménager, en particulier la face supérieure, et est montée, notamment horizontalement, sur un ou des éléments supports afin d'offrir une surface stable continue destinée à différents usages.

10. Equipement mobilier et/ou ménager selon l'une des revendications 8 ou 9, **caractérisé en ce que** ladite plaque est munie d'accessoires ou d'équipements de type élément chauffant, source lumineuse, composant sonore ou vibrant, système d'affichage, carte électronique, boîtier ou interface de commande ou capteur.

11. Procédé d'assemblage d'un élément rapporté ou d'un accessoire à la plaque selon l'une des revendications 1 à 7, selon lequel l'élément rapporté ou l'accessoire est monté sur au moins un élément de connexion de la plaque en opérant un ou des mouvements suivant au moins deux axes différents et/ou en opérant au moins deux mouvements, en particulier en translation(s) et/ou rotation(s), et/ou en exerçant une force, sur au moins une partie de l'élément rapporté, orientée vers la plaque vitrocéramique, la direction d'introduction de l'élément à rapporter dans l'élément de connexion étant préférentiellement différente de, en particulier perpendiculaire à, la direction de ladite force.

## Patentansprüche

1. Glaskeramikplatte (1), die insbesondere zur Verwendung als Möbeloberfläche und/oder Arbeitsplatte bestimmt ist und auf mindestens einer ihrer Flächen, insbesondere ihrer Unterseite (1'), mindestens ein Verbindungselement (2) mit einer Höhe von weniger als 10 cm umfasst und deren Querschnitt in einen Kreis mit einem Durchmesser von weniger als 3 cm fällt, wobei das Verbindungselement aus einem Material gebildet ist, das gegenüber mindestens 70 °C beständig ist, und mindestens ein Befestigungssystem umfasst, das eine Befestigung entlang mindestens zwei Achsen und/oder zwei Bewegungen ermöglicht, die insbesondere durch mindestens zwei unterschiedliche Translations- und/oder Rotationsbewegungen erhalten werden, und/oder geeignet ist, eine auf die Glaskeramikplatte gerichtete Kraft auszuüben, das Verbindungselement oder mindestens ein Teil der Verbindungselemente sind geeignet, um vorteilhafterweise auf herausnehmbare Weise mindestens ein oder mehrere aufzusteckende Elemente (8') aufzunehmen, insbesondere mindestens einen Teil eines Stützelements (9) zur Aufnahme entweder eines oder mehrerer zu kombinierender Zubehörteile oder mindestens einen Teils eines zu kombinierenden Zubehörs, wobei das oder die aufzusteckenden Elemente jeweils mit zumindest einem komplementären Befestigungsmittel des Befestigungssystems versehen sind, das zu dem Verbindungselement gehört, **dadurch gekennzeichnet, dass** das Befestigungssystem durch die Verbindung mindestens eines Druckelements in Form einer Feder (5) mit einem Anschlagelement in Form eines Arretierstifts (10, 10'), der die Feder zusammengedrückt hält, sobald das Befestigungsmittel des aufgesteckten Elements in das Verbindungselement eingeführt wird, gebildet ist.

2. Glaskeramikplatte (1), die insbesondere zur Verwendung als Möbeloberfläche und/oder Arbeitsplatte bestimmt ist und auf mindestens einer ihrer Flächen, insbesondere ihrer Unterseite (1'), mindestens ein Verbindungselement (2) mit einer Höhe von weniger als 10 cm umfasst und deren Querschnitt in einen Kreis mit einem Durchmesser von weniger als 3 cm fällt, wobei das Verbindungselement aus einem Material gebildet ist, das mindestens gegenüber 70 °C beständig ist, und mindestens ein Befestigungssystem umfasst, das eine Befestigung ermöglicht, die geeignet ist, eine auf die Glaskeramikplatte gerichtete Kraft auszuüben, wobei das Verbindungselement geeignet ist, vorteilhafterweise auf herausnehmbare Weise mindestens ein oder mehrere aufzusteckende Elemente (8') aufzunehmen, insbesondere mindestens einen Teil eines Stützelements (9) zur Aufnahme entweder eines oder mehrerer zu kombinierender Zubehörteile oder mindestens einen Teil eines zu kombinierenden Zubehörs, **dadurch gekennzeichnet, dass** der mindestens eine Teil der Verbindungselemente einen hohlzylindrischen Körper (3) umfasst, der mit einem Hohlraum (15) versehen ist, dessen Innenfläche aus einem ferromagnetischen Material ist, und das mindestens eine oder die mehreren aufzusteckenden Elemente einen Teil mit einem magnetischen (14') Ende (16) umfassen, das geeignet ist, um in dem Hohlraum aufgenommen zu werden, **oder dass** das mindestens eine Teil der Verbindungselemente einen hohlzylindrischen Körper (3) umfasst, der mit einem Hohlraum (15) versehen ist, in dem ein Magnet (14) befestigt ist, und das mindestens eine oder die mehreren aufzusteckenden Elemente einen Teil mit einem Ende (16) aus ferromagnetischem Material umfassen, das geeignet ist, um in dem Hohlraum aufgenommen zu werden.

3. Glaskeramikplatte nach Anspruch 1 oder 2, **dadurch gekennzeichnet, dass** das Verbindungselement eine Höhe von weniger als 6 cm, vorzugsweise weniger als oder gleich 4 cm, aufweist, und einen Querschnitt, der in einen Kreis mit einem Durchmesser von weniger als 2 cm fällt.

4. Glaskeramikplatte nach einem der Ansprüche 1 bis 3, **dadurch gekennzeichnet, dass** das Verbindungselement ein- oder mehrteilig ist und das äußere Erscheinungsbild eines zylindrischen Zapfens oder Stifts aufweist, gegebenenfalls einen oder mehrere vertiefte Teile aufweist und/oder gegebenenfalls mit einem oder mehreren anderen äußeren oder inneren Bestandteilen versehen ist.

5. Glaskeramikplatte nach einem der Ansprüche 1 bis 4, **dadurch gekennzeichnet, dass** das Verbindungselement zumindest teilweise aus wärmebeständigem Material bzw. Materialien und/oder nichtmagnetischem Material bzw. Materialien gebildet ist.

6. Glaskeramikplatte nach einem der Ansprüche 1 bis 5, **dadurch gekennzeichnet, dass** die Platte mehrere Verbindungselemente umfasst, die unter der Plattenunterseite positioniert sind.

7. Glaskeramikplatte nach einem der Ansprüche 1 bis 6, **dadurch gekennzeichnet, dass** die Platte eine monolithische Platte ist mit einer Dicke von weniger als 15 mm, zwischen 20 und 400 °C einem Ausdehnungskoeffizienten von weniger als 30.10⁻⁷ K⁻¹ und einer Oberfläche, die größer oder gleich 0,7 m² ist.

8. Mobiliar- und/oder Haushaltsausstattung, insbesondere Arbeitsplatte oder Möbelstück, umfassend mindestens eine Glaskeramikplatte nach einem der Ansprüche 1 bis 7.

9. Mobiliar- und/oder Haushaltsausstattung nach Anspruch 10, **dadurch gekennzeichnet, dass** die Platte mindestens 50 % oder sogar die gesamte Fläche der Mobiliar- und/oder Haushaltsausstattung einnimmt, insbesondere die Oberseite, und insbesondere horizontal auf einem oder mehreren Stützelementen montiert ist, um eine durchgehende stabile Oberfläche bereitzustellen, die für unterschiedliche Verwendungen bestimmt ist.

10. Mobiliar- und/oder Haushaltsausstattung nach einem der Ansprüche 8 oder 9, **dadurch gekennzeichnet, dass** die Platte mit Zubehör oder Ausrüstungen der Art Heizelement, Lichtquelle, Ton- oder Vibrationselement, Anzeigesystem, Elektronikkarte, Steuereinheit oder -schnittstelle oder Sensor versehen ist.

11. Verfahren zum Montieren eines aufzusteckenden Elements oder eines Zubehörs an der Platte nach einem der Ansprüche 1 bis 7, gemäß dem das aufgesteckte Element oder das Zubehörteil an mindestens ein Verbindungselement der Platte montiert wird, indem eine oder mehrere Bewegungen entlang mindestens zwei unterschiedlicher Achsen durchgeführt werden und/oder mindestens zwei Bewegungen durchgeführt werden, insbesondere durch Translation(en) und/oder Drehung(en), und/oder durch Ausüben einer Kraft auf mindestens einen Teil des aufgesteckten Elements, die auf die Glaskeramikplatte gerichtet ist, wobei sich die Einsteckrichtung des aufzusteckenden Elements in das Verbindungselement vorzugsweise von der Richtung der Kraft unterscheidet, insbesondere senkrecht dazu.

## Claims

1. A glass-ceramic sheet (1) intended in particular to be used as a surface of a furniture unit and/or as a worktop, and which comprises, in at least one of its faces, in particular its lower face (1'), at least one connection element (2) of a height less than 10 cm and of which the cross section can be inscribed inside a circle of a diameter less than 3 cm, said connection element being made from a material able to withstand at least 70°C and comprising at least one fixing system allowing fixing along at least two axes and/or in two movements, in particular obtained by at least two different translational and/or rotational movements, and/or able to exert a force directed toward the glass-ceramic sheet, said connection element or at least part of said connection elements are able to accept, advantageously removably, at least one or more elements to be added (8'), in particular at least part of a support element (9) that is to accept one or more accessories to be associated, or at least part of an accessory that is to be associated, said element or elements to be added are each provided with at least one fixing means that complements the fixing system belonging to said connection element, **characterized in that** the fixing system is formed by the combination of at least one pressing element in the form of a spring (5), with a stop element in the form of a pin (10, 10'), keeping the spring in compression once the fixing means of the added element has been introduced into the connection element.

2. A glass-ceramic sheet (1) intended in particular to be used as a surface of a furniture unit and/or as a worktop, and which comprises, in at least one of its faces, in particular its lower face (1'), at least one connection element (2) of a height less than 10 cm and of which the cross section can be inscribed inside a circle of a diameter less than 3 cm, said connection element being made from a material able to withstand at least 70°C and comprising at least one fixing system allowing fixing able to exert a force directed toward the glass-ceramic sheet, said connection element being able to accept, advantageously removably, at least one or more elements to be added, in particular at least part of a support element that is to accept one or more accessories to be associated, or at least part of an accessory that is to be associated,
**Characterized in that** said at least one part of said connection elements comprises a hollow cylindrical body (3) having a cavity (15), the cavity interior surface being made of a ferromagnetic material and said at least one or more elements to be added comprises a part with an magnetized (14') end (16) able to become housed in the cavity or **in that** at least one part of said connection element comprises a hollow cylindrical body (3) having a cavity (15) in which a magnet (14) is fixed and said at least one or more elements to be added comprises a part with and end (16) in a ferromagnetic material able to become housed in the cavity.

3. The glass-ceramic sheet as claimed in claims 1 or 2, **characterized in that** said connection element has a height less than 6 cm, advantageously less than or equal to 4 cm, and a cross section that can be inscribed inside a circle of a diameter less than 2 cm.

4. The glass-ceramic sheet as claimed in one of claims 1 to 3, **characterized in that** said connection element is made in one or more parts and has the external appearance of a cylindrical stud or pin, where appropriate comprising one or more hollowed parts and/or where appropriate equipped with one or more other external or internal constituent components.

5. The glass-ceramic sheet as claimed in one of claims 1 to 4, **characterized in that** said connection element is formed, at least in part, of refractory and/or nonmagnetic material(s).

6. The glass-ceramic sheet as claimed in one of claims 1 to 5, **characterized in that** the sheet comprises several connection elements positioned under the lower face of the sheet.

7. The glass-ceramic sheet as claimed in one of claims 1 to 6, **characterized in that** said sheet is a monolithic sheet having a thickness of less than 15 mm, an expansion coefficient of less than 30×10⁻⁷ K⁻¹ between 20°C and 400°C, and a surface area of greater than or equal to 0.7 m².

8. An item of furniture and/or household equipment, particularly a worktop or furniture unit, comprising at least one glass-ceramic sheet as claimed in one of claims 1 to 7.

9. The item of furniture and/or household equipment as claimed in claim 8, **characterized in that** said sheet occupies at least 50% or even all of one face of said item of furniture and/or household equipment, particularly the top face, and is mounted, in particular horizontally, on one or more support elements so as to offer a continuous stable surface intended for various uses.

10. The item of furniture and/or household equipment as claimed in one of claims 8 or 9, **characterized in that** said sheet is equipped with accessories or equipment of the heating element, light source, audible or vibrating component, display system, electronic board, control unit or interface or sensor type.

11. A method for assembling an added element or an accessory on the sheet as claimed in one of claims 1 to 7, whereby the added element or the accessory is mounted on at least one connection element of the sheet by performing one or more movements along at least two different axes and/or by performing at least two movements, particularly translational and/or rotational movements, for example at least one screw-fastening or a mounting by bayonet or sliding pivot, and/or by exerting a force, on at least part of the added element, which force is oriented toward the glass-ceramic sheet, the direction in which the element that is to be added is introduced into the connection element preferably being different from, particularly perpendicular to, the direction of said force.
